Europäisches Patentamt

European Patent Office

Office européen des brevets

(11) Publication number: **0 100 559**
A1

(12) **EUROPEAN PATENT APPLICATION**

(21) Application number: 83107706.0

(22) Date of filing: 04.08.83

(51) Int. Cl.³: **B 29 D 23/12**

(30) Priority: 06.08.82 IT 2275682

(43) Date of publication of application:
15.02.84 Bulletin 84/7

(84) Designated Contracting States:
AT BE CH DE FR GB LI LU NL SE

(71) Applicant: Anselm, Anthony Cesar
Via Ai Ronchi 11
CH-6948 Porza - Lugano(CH)

(72) Inventor: Anselm, Anthony Cesar
Via Ai Ronchi 11
CH-6948 Porza - Lugano(CH)

(74) Representative: Prüfer, Lutz H., Dipl.-Phys.
Dipl.-Phys. Lutz H. Prüfer, Ing. G. Dragotti
Willroiderstrasse 8
D-8000 München 90(DE)

(54) Process and apparatus for the manufacturing of plastic hoses.

㉗ In the continuous manufacturing of hoses of plastic material, a strip (28) having at least a hollow U shaped rib (30) is extruded and spirally wound onto a mandrel (11) comprising a number of shafts (18) rotating around themselves, which define a cylindrical envelope surface (24), said shafts (18) being finned for the supporting of said ribs during the winding and the solidifying of the hose onto the mandrel (11), whereas means are provided raising an adjustable resistance against the advancing of said hose along said mandrel.

Fig.1

COMPLETE DOCUMENT

- 2 -

0100559

The present invention relates to the manufacturing of plastic hoses and more specifically to a process and an apparatus for such a maufacturing.

The diffusion and popularity gained since long time by the plastic pipes and especially by the plastic hoses are well known. In this connection, it is enough to mention the uses in the field of the vacuum cleaners, of the car aeration systems and the like . To date, the most popular process for the production of hoses was and is that of the extrusion of a strip through a rotating nozzle.

The strip is spirally wound onto a mandrel, whereas downstream positioned dragging means take care of the removal of the hose from the mandrel as it is formed.

For uses in which however the hose must have a remarkable crushing and bursting strength, a reinforcing member is embedded into the pipe wall, the reinforcing member being of a more rigid material, possibly coextruded with the material forming the afore said strip and which will form the wall of the final hose.

For the production of the latter type of hose, the Italian Patents Nos. 789,648, and 811,942 disclose a process and apparatus wherein a composite strip is extruded, comprising a core of rigid material embedded into a softer material.

Such a strip is wound around a rotating mandrel, the outer surface of which is formed by the cylindrical surface defined by a number of shafts which are mounted in a skew position with respect to the axis of said cylindrical surface, said shafts being driven into rotation around their own axis.

Consequently the composite strip coming out of the coextrusion head is spirally wound onto said cylindrical surface and advanced by the motion which is naturally transmitted by the arrangement of shafts to the hose being formed. The just formed and enough solidified hose passes through a cooling medium to be thereafter collected in a finally stabilized condition.

As regards, on the contrary, the normal hoses, namely hoses without reinforcing spiral core, their manufacturing comprises the extrusion of a strip, essentially shaped as a narrow and deep U, and the spiral winding of the strip, often already cooled down, the adjacent turns being fused for instance by means of a cement  and of a hot air jet, causing a partial and surface limited melting of the two lenghts of strip to be welded.

Such a technology, however, gives place to several problems and drawbacks both from

- 3 -

0100559

the point of view of the thus obtained hose and from that of the manufacturing process and apparatus.

In fact, thes hose having the aspect of a number of hollow ribs which are positioned in a crosswise manner with respect to the axis of the hose, may show weakness at the welding areas which may lead to failures especially in the presence of water or air under pressure.

Secondly, the hose has a relevant axial compressibility whereby during the use, namely when air or a liquid under pressure flows within the hose and an abrupt pressure variation takes place, the lenght of the hose can abruptly vary and by a not negligible amount.

Moreover, since the U shaped ribs forming the single turns of the hose must be necessarily spaced from each other, in order to permit the application of the cement, in the final hose they constitute a receptacle of dust and other dirt which are difficulty removable.

From the point of view of the method and of the apparatus, there are selfevident the drawbacks arising when the already at least partially cooled strip is spirally wound onto a mandrel, the molten cement is applied and a hot air jet must be directed onto some determined areas and only those areas of the strip.

The main pupose of the present invention is that of providing a process and an apparatus for the manufacturing of plastic hoses by which the above mentioned problems and drawbacks are essentially done away with.

A more specific purpose of the present invention is that of providing a process and apparatus by which is is possible to continuously manufacture plastic hoses in which the possibility of deposition of dust and foreign material within the hose is essentially reduced and which are essentially not compressible in the axial direction.

A further purpose of the present invention is that of providing a process and an apparatus by which improved plastic hoses can be manufactured.

These and other purposes are achieved by means of a process for the continuous manufacturing of plastic hoses, of the type in which a strip having at least a U shaped rib is continuously extruded and spirally wound onto a forming and advancing mandrel so that the edges of adjacent turns overlap by a desired surface area, characterized in that said U shaped rib is supported in its final shape by means fixed to said mandrel until the welding of adjacent turns is completed and the resulting pipe is sufficiently solidified so as not to undergo shape and/or dimension variations, and in that an adjustable resistance is opposed to the advancing of the hose being formed along said mandrel thus causing the turns to be axially pressed each against the other, said hose being formed undergoing moreover a cooling since the time of spirally winding onto said mandrel.

In turn the apparatus according to the invention, of the type comprising an extrusion head capable of extruding a strip comprising in its cross-section at least one U shaped hollow rib and two side fins which can be overlapped to form with the fins of adjacent strips the continuous wall of a pipe, and a mandrel onto which said strip is spirally woud, said mandrel comprising a number of shafts each concomitanly rotating around its axis, said shafts being positioned so as to define a cylindrical envelope surface and being skewed with respect to the said cylindrical surface, characterized in that each said shaft has a surface portion provided with cross finnings capable of mating said U shaped hollow space of said rib of said extruded strip, said finnings being positioned so that the finnings of adjacent shafts follow the spiral winding lines of said strip onto said mandrel, and further characterized in that at the end remote from said finnings said shafts terminate in circumferential means capable of generating an adjustable friction between the pipe being formed and the surface of said mandrel as defined by said shafts, means being moreover provided for the internal cooling of said mandrel.

According to another embodiment of the hose according to the invention, at least one isolated electrical conductor is interposed between each rib and the adjacent ones, for the electrical connection along the pipe.

The specific features and advantages of the present invention shall appear more clearly from the following detailed description of a preferred embodiment, with reference to the accompanying drawings, in which:

Fig. 1 is a side, diagrammatic partially cross-sectional, view of the apparatus according to the invention;

Fig. 2 is a cross-section view according to the lines II-II of fig. 1;

Fig. 3 is a cross-section view, on a greater scale, of two adjacent turns of the hose produced according to the present invention;

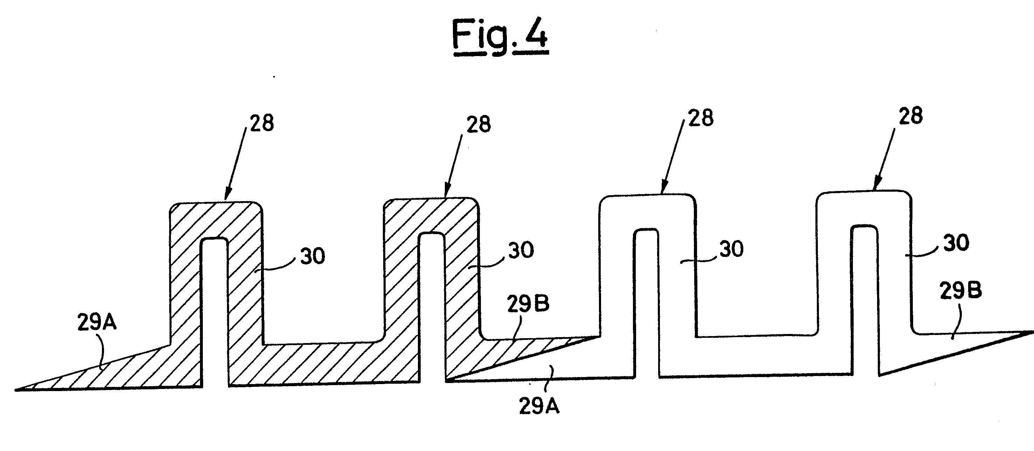

Figs. 4 and 5 are views like fig. 3 of different embodiments of the hose.

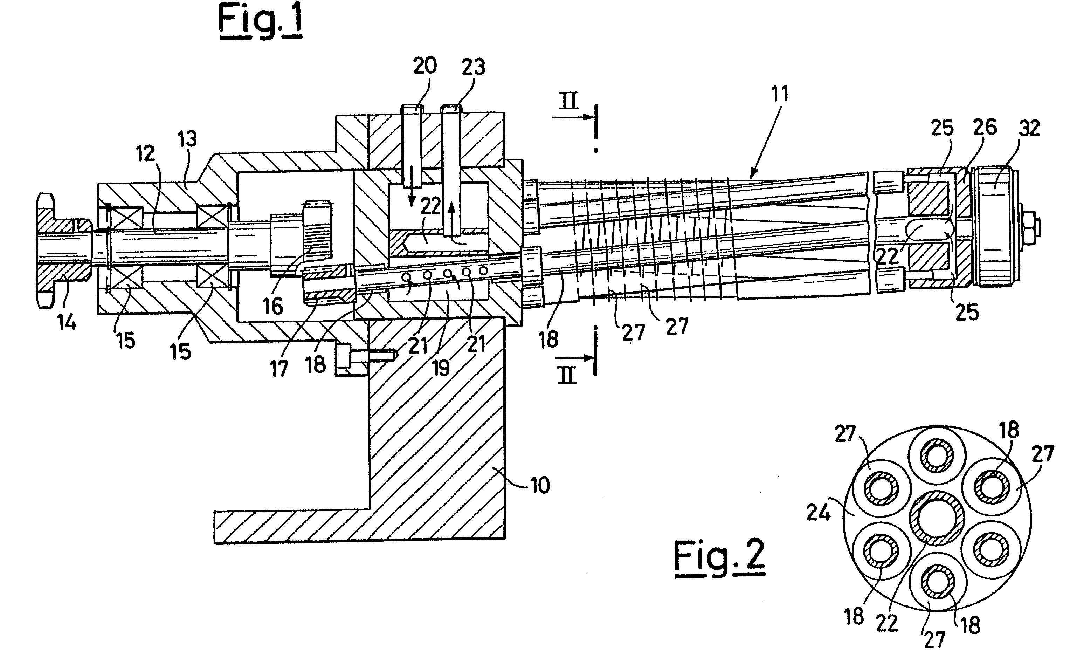

The apparatus of the present invention, of which by the way there are shown in fig. 1 only those parts necessary for the understanding of the invention, comprises a frame 10, from which the forming mandrel 11 protrudes horizontally in a cantilevered fashion, whereas rearwardly a driving shaft 12 is mounted, being journalled in a cover casing 13 and driven into rotation from a pinion 14 which is in turn driven by a driving motor or gearing not shown.

Suitable bearings 15 support the shaft 15 in its rotation.

At the other end, the shaft 12 is provided with a ring gear 16 meshed with a pinion 17, fastened to the rear end of a shaft 18.

In fig. 1, for sake of clarity of drawing, only one shaft 18 is shown, but as a matter of fact the ring gear 16 is simultaneously meshed with all the pinions 17 of the shafts 18 which, as it will appear, form the operating surface of the mandrel 11.

A hollow space 19 is provided in the frame 10, it being sealingly crossed by the shafts 18, the space 19 being connected through a fitting 20 with a cooling water feed.

As it is shown in fig. 1 each shaft 18 is hollow and, at the hollow space 19, is provided with ports 21 through which water or other cooling medium enters the shafts 18, flowing throghout their length, and being then collected through the ducts 25, formed in the head part 26, in a central header 22 by which it is returned to an outlet fitting 23.

As it is clearly viewable in fig. 2, the shafts 18 are positioned around a central support, which in the specific case in the header 22 ,so as to define a cylindrical envelope surface 24. At the same time the shafts 18 are skewed with respect to the axis of the cylindrical surface 24.

Consequently, owing to the rotation of the shafts 18, the pipe being formed onto the mandrel is caused to have an advancing motion.

As shown in fig. 1, at the end of the mandrel 11 a sleeve 32, for instance of rubber, is mounted.

Preferably the sleeve 32 is in form of an expandable element in an adjustable manner, so as to be aligned or protrude by the desired height with respect to the surface 24 of the mandrel 11. Each shaft 18, in the fore part, namely that close to the frame 10, is provided with disks 27 which are positioned in a cross-wise manner with respect to the axis of the shaft and thus inclined therewith with respect to the axis of the mandrel 11. As shown in fig. 1, the disks 27 of adjacent shafts 18 are aligned

- 6 -

0100559

according to planes which essentially define a spiral path with respect to the axis of the mandrel 11.

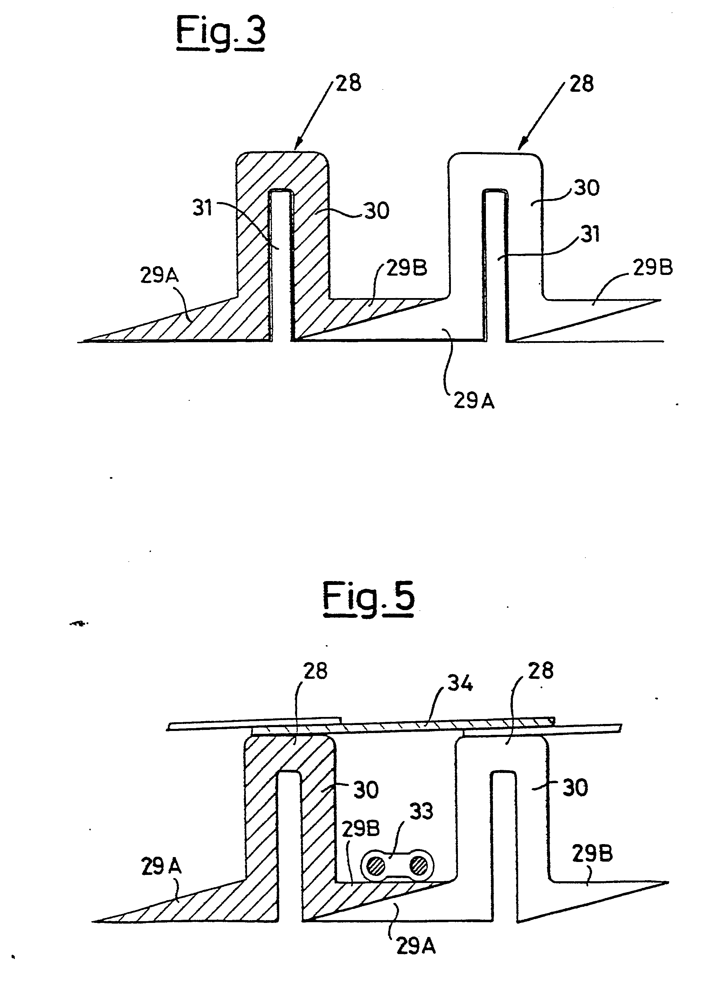

At the junction of the mandrel 11 to the frame 10 means are provided for the extrusion of a strip such as that illustrated in fig. 3.

These extrusion means are not shown as being conventionally known.

They can be for instance of the type shown in the already mentioned Italian patents and likewise positioned.

Considering now the fig. 3, the srrip being extruded, generally indicated by reference 28, comprises two fins 29A and 29B and a U shaped rib 30, the internal space of which is indicated by the reference 31.

From fig. 3 it can be clearly appreciated how the complementary fins 29A and 29B of two adjacent turns, according to which the strip 28 is positioned upon being extruded and wound onto the mandrel 11, are engaged and welded to each other.

According to the present invention, the cavities 31 find support in the disks 17 for the whole distance necessary in order that the welding of the fins takes place and the pipe takes its, form without deformation of the ribs 28. Obviously it contributes to the strength uniformity of the final hose.

Furthermore, the friction resistance that the pipe meets during the advancement along the mandrel 11, this resistance being caused by the sleeve 32, results in a force pushing the turns of the hose and thus the ribs to approach each other as much as possible in the phase in which the plastic material is not yet fully solidified and stabilized by the cooling.

The consequence thereof is an essential dimensional stability and above all an axial incompressibility. It is thus possible to reach a condition of almost welding of the edges of the U shaped cavity inside the hose, the latter thus showing an internal surface smooth and devoid of protruding parts and cavities which may constitute a dust receptabcle, besides being a trubulence inducing element and at the very end increasing the pressure drop of the fluid flowing through the pipe.

On the other hand, the helicoidal motion of the pipe along the mandrel 11 ensures that the cavities 31 are disengaged from the disks 27 as the pipe advances.

Of course, instead of using the sleeve 32, the necessary friction resistance can be generated in a different manner, such as for instance by roughening the surface of the end member 26 of the mandrel 11.

0100559

The possibility is also contemplated by the present invention of welding adjacent turns at the sides of the US shaped rib, by taking advantage of the same principle.

Lastly, it is to be pointed out that the process and apparatus of the present invention, although described with reference to the plastc material with which the said hoses are normally manufactured, may be used as well for the manufacturing of rubber hoses since it is only necessary to provide, at the exit of the pipe from the mandrel a per se known vulcanizing step.

According to a first embodying variation of the invention, it is possible to take advantage the residual plasticity of the plastic material forming the pipe when it is still onto the mandrel 11, to secure or even embed an electrical conductor 33 between a rib 28 and the adjacent ones, as shown in fig. 5; in that case the hose comprises also the electrical connection, between the energy soure positioned at one end and a whatsover tool or device mounted at the opposite end.

In fig. 5, there is also illustrated another possible embodiment, according to which a ribbon 34 is spirally wound outwardly of the rib 28 to close the spaces remaining between each rib and the adjacent one, whereby although the functionality of the hose is maintained unchganed the entry of dust and/or dirt between the ribs is avoided and the hose is prevented from being bent more than the working radius.

Preferably the ribbon 34 is wound onto the top of the rib 28 and has a width greater than the distance between the mid-lines of two adjacent ribs, so as to close the cavity outwardly remaining between two adjacent ribs.

It is evident that the two embodiments shown in fig. 5 are not necessarily combined since there may be adopted either the fastening of the conductor 33 and/or the wrapping with the ribbon 34. It is anyhow meant that in both cases there is preferably taken advantage of the state of still relative plasticity of the pipe just formed onto the mandrel 11 and advancing along the same.

Of course in both cases the apparatus shall comprise means , per se known, for the feeding of the conductor 33 and/or of the ribbon 34 in the desired and suitable position onto the mandrel 11.

CLAIMS                                                   0100559

1. A process for the continous manufacturing of plastic hoses, of the type in which a strip having at least a U shaped rib is continuously extruded and spirally wound onto a forming and advancing mandrel so that the edges of adjacent turns overlap by a desired surface area, their welding occuring owing to the residual heat of the strip characterized in that said U shaped rib is supported in its final form by means fastened to said mandrel until the welding of adjacent turns is completed and the resulting hose is enough solidified so as not to undergo changes of shape and/or dimensions, and in that there is opposed an adjustable resistance to the advancement of the hose being formed along said mandrel causing the turns to te approached one against the other in axial direction, said hose being formed undergoing moreover a cooling since the time of spiral winding onto said mandrel.

2. A process according to claim 1, characterized in that said resistance opposed to the advancement of the said hose being formed along said mandrel is an adjustable friction resistance.

3. Apparatus for the continuous manufacturing of hoses of plastic material, of the type comprising an extrusion head adapted for the extrusion of a strip comprising in its cross-section a U shaped hollow rib and two side fins which can be overlapped to form with the fins of adjacent strips the continuous wall of a hose, and a mandrel onto which said strip coming out of said extrusion head is spirally wound, said mandrel comprising a number of shafts each concomitanly rotating around its axis, said shafts being positioned so as to define a cylindrical envelope surface and being skewed with respect to the axis of said cylindrical envelope surface, characterized in that each said shaft shows a surface portion provided with cross finnings adapted to temporarily mate said U shaped cavity of said rib of said extruded strip, said finnings being arranged so that the finnings of adjacent shafts are positioned according to the lines of spiral winding of said strip onto said mandrel, and characterized moreover in that said mandrel is provided with means adapted to originate an adjustable friction resistance between said hose being formed and said mandrel, means being furthermore provided for the internal cooling of said mandrel.

5..Apparatus according to claim 3, characterized in that said means for originating an adjustable friction resistance consist of an expandable or inflatable rubber sleeve,

0100559

mounted at the end of said mandrel.

6. Apparatus according to claim 3, characterized in that said means for originating a friction resistance consist of a surface roughening of said mandrel.

7. Apparatus according to claim 3, characterized in that said cooling means comprise a cooling fluid circuit, said circuit being formed by an axial duct formed in each said shaft, a feeding cavity connected with the upstream end of said axial duct of each shaft, and a collecting and discharging header connected to the downstream end of said axial duct of each shaft.

8. Apparatus according to claim 7, characterized in that said collecting and dischargingn header is connected to said axial duct of each shaft through a head member provided with connection ducts.

9. Apparatus according to claim 8, characterized in that said head member is surface roughened to determine said friction resistance.

10. A process according to claim 1, characterized in that an electrical conductor is fed between said ribs of adjacent turns so that it is welded to the outer surface of the hose being formed onto said mandrel.

11. A process according to claim 1, characterized in that a ribbon having a width at least equal to the distance between the mid-lines of two adjacent turns is fed onto onto the top of said ribs of adjacent turns whereby the cavity formed between two adjacent ribs is closed.

12. Apparatus according to claim 3, characterized by comprising means for the spiral feeding of an electrical conductor into the cavity between adjacent ribs of the hose being formed onto the mandrel.

13. Apparatus according to claim 3, characterized by comprising means for the spiral feeding of a ribbon having width at least equal to the the distance between the mid-lines of adjacent turns.

14. Plastic hose when produced according to the process of claim 1 or 10 or with the apparatus of claim 3 or 12.

# Fig.1

# Fig.2

0100559

## Fig.3

## Fig.5

# Fig.4

European Patent
Office

**EUROPEAN SEARCH REPORT**

| | **DOCUMENTS CONSIDERED TO BE RELEVANT** | | EP 83107706.0 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | DE - B2 - 2 308 418 (PETZETAKIS) <br> * Totality * <br> -- | . | B 29 D 23/12 |
| A | US - A - 3 997 382 (TANAKA) <br> * Totality * <br> ----- | | |
| | | | **TECHNICAL FIELDS SEARCHED (Int. Cl. ³)** |
| | | | B 29 D <br> E 29 H <br> B 65 H |

| The present search report has been drawn up for all claims | | |
|---|---|---|
| Place of search | Date of completion of the search | Examiner |
| VIENNA | 11-11-1983 | BAUMGARTNER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82